# EUROPÄISCHE PATENTANMELDUNG

(11) **EP 0 841 365 A1**
(43) Veröffentlichungstag der Anmeldung: **13.05.1998**
(21) Anmeldenummer: 97119149.9
(22) Anmeldetag: 03.11.1997
(51) Int. Cl.: C08J 3/24, C08L 23/26, C08F 297/08

(54) **Mit ungesättigten Estern teilvernetzte Kunststoffmassen**

(30) Priorität: 08.11.1996 DE 19646118
(71) Anmelder: BASF AKTIENGESELLSCHAFT, 67056 Ludwigshafen (DE)
(72) Erfinder: Seelert, Stefan, Dr., 67227 Frankenthal (DE); Rösch, Joachim, Dr., 67063 Ludwigshafen (DE); Rümpler, Klaus-Dieter, Dr., 67157 Wachenheim (DE); Kersting, Meinolf, Dr., 67435 Neustadt (DE); Huber, Karl, 67227 Frankenthal (DE)

(57) **Zusammenfassung**

Teilvernetzte Kunststoffmassen mit einem Schmelzflußindex von 0,1 bis 100 g/10 min., bei 230°C und unter einem Gewicht von 2,16 kg, und einem Gelgehalt unter 12 Gew.-% aus
a) einem Polymerisat aus
   a₁) 60 bis 92 Gew.-% eines Propylenhomopolymerisats und
   a₂) 8 bis 40 Gew.-% eines Propylencopolymerisats mit einpolymerisierten C₂-C₁₀-Alk-1-enen, wobei der Comonomergehalt, bezogen auf a₂), 15 bis 70 Gew.-% beträgt, und
b) einer Verbindung der folgenden allgemeinen Formel (I) 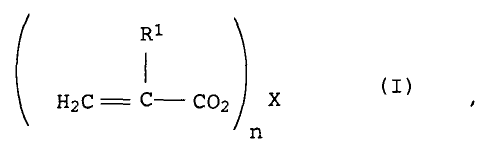 in der
   - R¹: für Wasserstoff oder für eine C₁-C₄-Alkylgruppe steht,
   - X: eine gegebenenfalls substituierte C₁-C₃₀-Alkylgruppe oder eine gegebenenfalls substituierte C₇-C₃₀-Arylalkylgruppe bedeutet, wobei die Alkylgruppierungen jeweils von
   einem oder mehreren Sauerstoffatomen in Etherfunktion ( -O- ) oder Carboxyfunktion ( -O-CO- ) und/oder von
   Stickstoffgruppierungen der Formel NR², in der R² für Wasserstoff, C₁- bis C₆-Alkyl oder C₁- bis C₆-Hydroxyalkyl steht,
   unterbrochen sein können und
   - n: der Zahl 2 oder 3 entspricht,
erhältlich durch Umsetzung des Polymerisats a) mit der Verbindung b) bei Temperaturen von 180 bis 280°C, Drücken von 1 bis 100 bar und mittleren Verweilzeiten des Reaktionsgemisches von 0,2 bis 10 Minuten.

## Beschreibung

Die vorliegende Erfindung betrifft teilvernetzte Kunststoffmassen mit einem Schmelzflußindex von 0,1 bis 100 g/10 min., bei 230°C und unter einem Gewicht von 2,16 kg, und einem Gelgehalt unter 12 Gew.-% aus
a) einem Polymerisat aus
   a₁) 60 bis 92 Gew.-% eines Propylenhomopolymerisats und
   a₂) 8 bis 40 Gew.-% eines Propylencopolymerisats mit einpolymerisierten C₂-C₁₀-Alk-1-enen, wobei der Comonomergehalt, bezogen auf a₂), 15 bis 70 Gew.-% beträgt, und
b) einer Verbindung der folgenden allgemeinen Formel (I) 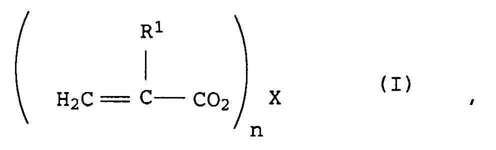 in der
   - R¹: für Wasserstoff oder für eine C₁-C₄-Alkylgruppe steht,
   - X: eine gegebenenfalls substituierte C₁-C₃₀-Alkylgruppe oder eine gegebenenfalls substituierte C₇-C₃₀-Arylalkylgruppe bedeutet, wobei die Alkylgruppierungen jeweils von
   einem oder mehreren Sauerstoffatomen in Etherfunktion ( -O- ) oder Carboxyfunktion ( -O-CO- ) und/oder von
   Stickstoffgruppierungen der Formel NR², in der R² für Wasserstoff, C₁- bis C₆-Alkyl oder C₁- bis C₆-Hydroxyalkyl steht,
   unterbrochen sein können und
   - n: der Zahl 2 oder 3 entspricht,
erhältlich durch Umsetzung des Polymerisats a) mit der Verbindung b) bei Temperaturen von 180 bis 280°C, Drücken von 1 bis 100 bar und mittleren Verweilzeiten des Reaktionsgemisches von 0,2 bis 10 Minuten.

Außerdem betrifft die vorliegende Erfindung ein Verfahren zur Herstellung von teilvernetzten Kunststoffmassen, sowie Folien, Fasern und Formkörper aus diesen Kunststoffmassen.

Zur Verbesserung der Zähigkeit von Homopolypropylen und insbesondere zur Verbesserung der Zähigkeit im Temperaturbereich unterhalb von 0°C ist es üblich, dem Homopolypropylen Ethylen-Propylen-Copolymerisate zur Zähmodifizierung zuzugeben. Hierbei hat es sich als am wirtschaftlichsten herausgestellt, wenn die zähmodifizierten Polypropylene direkt in einem mehrstufigen Polymerisationsprozeß hergestellt werden. Diese Produkte werden als Polypropylen-Blockcopolymerisate oder Polypropylen-Impactcopolymerisate bezeichnet. Entsprechende Ethylen-Propylen-Copolymerisate werden beispielsweise in EP-A 515 855 beschrieben.

Generell gilt für die zähmodifizierten Polypropylene, daß für eine Verbesserung der Zähigkeit eine Verringerung der Steifigkeit in Kauf genommen werden muß. Das erreichte Eigenschaftsprofil ist für viele Anwendungen zwar schon ausreichend, jedoch sind für eine Reihe von Eigenschaften noch Verbesserungen wünschenswert. Hierbei sind neben dem Steifigkeits-/Zähigkeitsverhältnis die Wärmeformbeständigkeit, die Bindenahtfestigkeit und das Weißbruchverhalten, d.h. das unerwünschte Entstehen von Weißfärbung nach einer Schlagbeanspruchung, zu nennen.

Eine Möglichkeit, die Eigenschaften von Polymeren zu verbessern, besteht in einer Vernetzung. Vernetzte Polymerisate weisen gegenüber nicht vernetzten Polymerisaten den Vorteil einer höheren mechanischen Stabilität auf. Vollständig vernetzte Materialien lassen sich aber aufgrund ihres geringen Schmelzflusses thermisch nicht mehr mit den in der Kunststofftechnik üblichen Methoden verformen (H.G. Elias, "Makromoleküle", Verlag Hüthig & Wepf, 4. Auflage, Seite 1 000 bis 1 003). Für die Verarbeitung von Polymerisaten ist es deshalb notwendig, darauf zu achten, daß der Vernetzungsgrad der Polymerisate nicht zu hoch liegt, so daß diese noch mit den in der Kunststofftechnik üblichen Apparaturen verformt werden können. Die Vernetzung kann mit ungesättigten Silanen in Gegenwart eines Kondensationskatalysators und eines Peroxids erfolgen. Es ist auch möglich, Bismaleinimidoverbindungen oder mehrwertige Metallsalze der Acrylsäure oder Methacrylsäure jeweils in Gegenwart von radikalisch zerfallenden Initiatoren einzusetzten.

Weiterhin ist bekannt, Polyolefine mit Peroxiden unter Zusatz von Acrylaten oder Methacrylaten mehrwertiger Alkohole zu vernetzen. So beschreibt beispielsweise die JP-A 41/30 106 ein Verfahren zur Herstellung von thermoplastischen Elastomeren, nach welchem Mischungen aus Polyolefinen und Kautschuken in Gegenwart von Peroxiden mit Acrylaten wie Trimethylolpropantriacrylat umgesetzt werden. Die dabei erhaltenen Produkte sind aber hochvernetzt und weisen einen Gelgehalt, eine Maßzahl für den Grad der Vernetzung, von größer oder gleich 100 %, bezogen auf den Kautschukgehalt, auf. Auch in der JP-A 63/142 056 wird ein Verfahren zur Vernetzung von thermoplastischen Elastomeren mit Hilfe von Triacrylaten beschrieben, bei welchem die erhaltenen Produkte ebenfalls Gelgehalte von mindestens 20 % aufweisen.

Bei diesen Verfahren hat es sich als nachteilig erwiesen, daß relativ hohe Vernetzermengen eingesetzt werden müssen und daß die daraus erhaltenen Materialien vollständig vernetzt sind, d.h. hohe Gelgehalte aufweisen, was zur Folge hat, daß sie nur schwer verarbeitet werden können.

Auch für die Herstellung der in der US-A 4 367 185 offenbarten, unter Zusatz von Triacrylaten hergestellten, vernetzten Polypropylenschäume ist eine relativ hohe Vernetzermenge notwendig. Die erhaltenen Polymere weisen demzufolge ebenfalls einen relativ hohen Gelgehalt auf.

Durch den Zusatz von Peroxid und mehrfunktionellen Acrylaten wie Trimethylolpropantriacrylat zu Extruder-Mischungen aus Propylenhomopolymerisat und Ethylen-Propylen-Kautschuk mit einem Propen-Gehalt von 26 - 28 % kann die Kerbschlagzähigkeit der Mischungen angehoben werden (B.C. Kim und H.I. Do: J. Appl. Polm. Sci. 61, 439ff, (1996)). Solche Mischungen sind verfahrenstechnisch jedoch schwieriger herzustellen als die in einem Prozeß mehrstufig polymerisierten Polypropylen-Impactcopolymerisate, bei denen sich schon bei der Polymerisation ein Gemisch aus Propylenhomopolymerisat und Ethylen-Propylen-Kautschuk bildet.

In der EP-A 686 664 wird gelehrt, Polymermischungen aus einem Homo- oder Copolymerisat des Propylens mit mindestens 50 mol-% Propylen und einem Homo- oder Copolymerisat des Ethylens mit mindestens 90 mol-% Ethylen in der Schmelze mit einem Radikalbildner und einem Vernetzer, der mindestens 3 Acrylatgruppen enthält, umzusetzen. Die so hergestellten Zusammensetzungen zeichnen sich durch verbesserte rheologische Eigenschaften aus.

Auch diese Polymermischungen bestehen aus zwei Polymerkomponenten. Diese liegen in der Schmelze phasensepariert nebeneinander vor und es ist schwierig, reproduzierbar jeweils die gleiche, stabile, homogene Verteilung der Komponenten ineinander zu erhalten.

Die EP-A 688 817 und die JP-A 61/152 442 beschreiben Kunststoffmassen, die durch Umsetzung von u. a. Polypropylen-Blockcopolymerisaten mit mehrfunktionellen Acrylaten wie Trimethylolpropantriacrylat erhalten werden. Die in diesen Schrift offenbarten Formmassen besitzen jedoch eine relativ geringe Steifigkeit und ein verbesserungswürdiges Steifigkeits-/Zähigkeitsverhältnis.

Der vorliegenden Erfindung lag daher die Aufgabe zugrunde, teilvernetzte Kunststoffmassen mit einer hohen Steifigkeit, einem guten Steifigkeits-/Zähigkeitsverhältnis, einer hohen Wärmeformbeständigkeit, guter Bindenahtfestigkeit, geringer Neigung zu Weißbruchbildung und möglichst geringen Gelgehalten zu entwickeln. Darüber hinaus sollten diese nach einem wenig aufwendigen Verfahren hergestellt und die Menge des dabei eingesetzten Vernetzers begrenzt werden können.

Demgemäß wurden die eingangs definierten, teilvernetzten Kunststoffmassen gefunden.

Die erfindungsgemäßen teilvernetzten Kunststoffmassen weisen einen Schmelzflußindex von 0,1 bis 100 g/10 min., bei 230°C und unter einem Gewicht von 2,16 kg, auf. Der Schmelzflußindex entspricht dabei der Menge an Polymerisat, die innerhalb von 10 Minuten aus der nach ISO 1133 genormten Prüfvorrichtung bei einer Temperatur von 230°C und unter einem Gewicht von 2,16 kg ausgepreßt wird. Besonders bevorzugt sind dabei solche teilvernetzten Kunststoffmassen, deren Schmelzflußindex 0,1 bis 50 g/10 min, bei 230°C und unter einem Gewicht von 2,16 kg, beträgt.

Der Gelgehalt der erfindungsgemäßen teilvernetzten Kunststoffmassen beträgt weniger als 12 Gew.-%. Der Gelgehalt entspricht dem Gewichtsanteil des Polymerisats, der nach 24stündiger Extraktion mit siedendem p-Xylol in einer Soxhlet-Apparatur nach dem Trocknen in der Hülse verbleibt. Insbesondere weisen die erfindungsgemäßen teilvernetzten Kunststoffmassen Gelgehalte unter 8 Gew.-% auf.

Die erfindungsgemäßen teilvernetzten Kunststoffmassen enthalten ein Polymerisat a) aus 60 bis 92 Gew.-% eines Propylenhomopolymerisats a₁) und 8 bis 40 Gew.-% eines Propylencopolymerisats a₂). Bevorzugt sind dabei solche Kunststoffmassen, deren Polymerisat a) 66 bis 90 Gew.-% eines Propylenhomopolymerisats a₁) und 10 bis 34 Gew.-% eines Propylencopolymerisats a₂) enthält. Unter diesen Kunststoffmassen werden solche besonders bevorzugt eingesetzt, deren Polymerisat a) aus 72 bis 88 Gew.-% eines Propylenhomopolymerisats a₁) und aus 12 bis 28 Gew.-% eines Propylencopolymerisats a₂) besteht. Die Propylencopolymerisate a₂) enthalten 15 bis 70 Gew.-% einpolymerisierte C₂-C₁₀-Alk-1-ene. Bevorzugt sind Polymerisate a), deren Propylencopolymerisate a₂) einen Comonomergehalt von 20 bis 65 Gew.-% und insbesondere von 30 bis 55 Gew.-% einpolymerisierter C₂-C₁₀-Alk-1-ene aufweisen.

Unter einpolymerisierten C₂-C₁₀-Alk-1-enen sind in diesem Zusammenhang insbesondere Ethylen, But-1-en, Pent-1-en, Hex-1-en, Hept-1-en oder Oct-1-en oder Gemische aus diesen Comonomeren zu verstehen, wobei bevorzugt Ethylen oder But-1-en eingesetzt werden.

Die Herstellung des erfindungsgemäß zu verwendenden Polymerisats a) kann in den üblichen, für die Polymerisation von Propylen verwendeten Reaktoren sowohl in der Gasphase, in Lösung, in flüssigen Monomeren oder auch in einer Aufschlämmung durchgeführt werden. Dabei kann entweder absatzweise, halbkontinuierlich oder bevorzugt kontinuierlich polymerisiert werden. Geeignete Reaktoren sind u.a. kontinuierlich betriebene Rührkessel, Schleifenreaktoren oder Wirbelbettreaktoren.

Bevorzugt wird das Polymerisat a) in einem mehrstufigen Polymerisationsprozeß hergestellt, wobei in der ersten Stufe das Propylenhomopolymerisat a₁) und anschließend in mindestens einer weiteren Stufe das Propylencopolymerisat a₂) hergestellt wird. Wird absatzweise gearbeitet, werden die Stufen nacheinander durch Variation der Reaktionsbedingungen polymerisiert. In der Regel wird jedoch kontinuierlich gearbeitet, wobei zunächst in der ersten Stufe in einem oder mehreren Reaktoren das Propylenhomopolymerisats a₁) und anschließend in einem oder mehreren weiteren Reaktoren das Propylencopolymerisats a₂) hergestellt wird. Zur Herstellung des Polymerisats a) ist es auch möglich, verschiedene Reaktortypen zu kombinieren. In einer besonders bevorzugten Ausführungsform erfolgt die Herstellung des Polymerisats a) in einem zweistufigen Gasphasen-Verfahren, wobei als Reaktoren kontinuierlich betriebene Rührkessel eingesetzt werden. Die Reaktoren enthalten ein Festbett aus feinteiligem Polymerisat, welches üblicherweise durch Rühren in Bewegung gehalten wird.

Das Verfahren kann mit den in der Polymerisationstechnik üblichen Ziegler-Natta-Katalysatoren durchgeführt werden. Diese enthalten u.a. neben einer titanhaltigen Feststoffkomponente noch Cokatalysator-Komponenten. Als Cokatalysator kommt dabei eine Aluminiumverbindung in Frage. Vorzugsweise werden neben dieser Aluminiumverbindung als weitere Bestandteile des Cokatalysators noch eine oder mehrere Elektronendonorverbindungen eingesetzt.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate der Bruttoformel SiO₂·aAl₂O₃, wobei a für einen Wert von 0,001 bis 2, insbesondere von 0,01 bis 0,5 steht, gut bewährt haben.

Die bevorzugt verwendeten Träger weisen einen Teilchendurchmesser von 0,1 bis 1000 µm, insbesondere von 10 bis 300 µm, ein Porenvolumen von 0,1 bis 10 cm³/g, insbesondere von 1,0 bis 5,0 cm³/g und eine spezifische Oberfläche von 10 bis 1000 m²/g, insbesondere von 100 bis 500 m²/g auf.

Als feinteiliger Träger für die titanhaltige Feststoffkomponente kann insbesondere auch ein feinteiliges anorganisches Oxid verwendet werden, das einen pH-Wert von 1 bis 6, einen mittleren Teilchendurchmesser von 5 bis 200 µm, insbesondere von 20 bis 70 µm und einen mittleren Teilchendurchmesser der Primärpartikel von 1 bis 20 µm, insbesondere von 1 bis 5 µm aufweist. Bei den sogenannten Primärpartikeln handelt es sich dabei um poröse, granuläre Oxidpartikel, welche durch Mahlung, gegebenenfalls nach vorgenommener Siebung, aus einem entsprechenden Hydrogel erhalten werden. Das Hydrogel wird dabei im sauren Bereich, d.h. in einem Bereich mit einem pH-Wert zwischen 1 und 6 erzeugt, oder aber mit entsprechend sauren Waschlösungen nachbehandelt und gereinigt.

Weiterhin ist das feinteilige anorganische Oxid u.a. auch noch dadurch charakterisiert, daß es Hohlräume bzw. Kanäle mit einem mittleren Durchmesser von 0,1 bis 20 µm, insbesondere von 1 bis 15 µm aufweist, deren makroskopischer Volumenanteil am Gesamtpartikel im Bereich von 5 bis 30 %, insbesondere im Bereich von 10 bis 30 % liegt. Das feinteilige anorganische Oxid weist ferner insbesondere ein Porenvolumen von 0,1 bis 10 cm³/g, bevorzugt von 1,0 bis 4,0 cm³/g und eine spezifische Oberfläche von 10 bis 1000 m²/g, bevorzugt von 100 bis 500 m²/g auf. Der pH-Wert, d.h. der negative dekadische Logarithmus der Protonenkonzentration des anorganischen Oxids liegt im Bereich von 1 bis 6, insbesondere im Bereich von 2 bis 5.

Bevorzugte anorganische Oxide sind insbesondere Oxide des Siliciums, des Aluminiums, des Titans oder eines der Metalle der I. bzw. der II. Hauptgruppe des Periodensystems. Als ganz bevorzugtes Oxid wird neben Aluminiumoxid oder Magnesiumoxid oder einem Schichtsilikat auch Kieselgel (SiO₂) verwendet, wobei dieses insbesondere durch Sprühtrocknung erhalten werden kann. Es können auch sogenannte Cogele, d.h. Gemische von zwei verschiedenen anorganischen Oxiden, eingesetzt werden. Derartige feinteilige anorganische Oxide sind aber auch im Handel erhältlich.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-(C₁-C₁₀-alkyl)-Verbindungen verwendet werden. Daneben kann die titanhaltige Feststoffkomponente noch Halogen, bevorzugt Chlor oder Brom, enthalten.

Außerdem enthält die titanhaltige Feststoffkomponente noch Elektronendonorverbindungen, beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel I 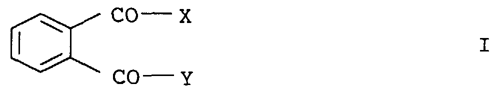 verwendet, wobei X und Y jeweils für Chlor oder einen C₁- bis C₁₀-Alkoxyrest oder gemeinsam für Sauerstoff stehen. Besonders bevorzugte Elektronendonorverbindungen sind Phthalsäureester, wobei X und Y C₁-C₈-Alkoxyreste, beispielsweise Methoxy-, Ethoxy-, Propyloxy- oder Butyloxyreste bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. C₁- bis C₁₅-Alkanole, C₅- bis C₇-Cycloalkanole, die ihrerseits C₁- bis C₁₀-Alkylgruppen tragen können, ferner Phenole, Naphthole sowie die C₁-C₁₀-Alkylderivate dieser Verbindungen.

Die titanhaltige Feststoffkomponente kann nach an sich bekannten Methoden hergestellt werden. Beispiele dafür sind u.a. in der EP-A 171 200, der GB-A 2 111 066, der US-A 4 857 613 und der US-A 5 288 824 beschrieben.

Bei der Herstellung der titanhaltigen Feststoffkomponente wird bevorzugt das nachstehende dreistufige Verfahren angewandt.

In der ersten Stufe versetzt man zunächst einen feinteiligen Träger, bevorzugt Siliciumdioxid oder SiO₂·aAl₂O₃ - wobei a für eine Zahl im Bereich von 0,001 bis 2, insbesondere im Bereich von 0,01 bis 0,5 steht - mit einer Lösung der magnesiumhaltigen Verbindung in einem flüssigen Alkan, wonach man dieses Gemisch 0,5 bis 5 Stunden lang bei einer Temperatur zwischen 10 und 120°C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu. Nach etwa 30 bis 120 Minuten trennt man den Feststoff von der flüssigen Phase ab.

In der zweiten Stufe bringt man das auf diese Weise erhaltene Produkt in ein flüssiges Alkan ein und fügt danach ein C₁- bis C₈-Alkanol, insbesondere Ethanol, ein Halogenid oder ein Alkoholat des drei- oder vierwertigen Titans, insbesondere Titantetrachlorid, sowie eine Elektronendonorverbindung, insbesondere ein Phthalsäurederivat der allgemeinen Formel I hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Dieses Gemisch wird wenigstens eine Stunde lang bei einer Temperatur zwischen 10 und 150°C gerührt, der so erhaltene feste Stoff anschließend abfiltriert und mit einem flüssigen Alkan, bevorzugt mit Hexan oder Heptan, gewaschen.

In der dritten Stufe extrahiert man den aus der zweiten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit einem Cokatalysator als Ziegler-Natta-Katalysatorsystem verwendet. Als Cokatalysator kommen dabei Aluminiumverbindungen in Betracht.

Geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist.

Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Besonders geeignete Elektronendonorverbindungen sind dabei siliciumorganische Verbindungen der allgemeinen Formel II

R'ₙSi(OR'')₄₋ₙ II

wobei R' gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Arylalkylgruppe bedeutet, R'' gleich oder verschieden ist und eine C₁- bis C₂₀-Alkylgruppe bezeichnet und n für die Zahlen 1, 2 oder 3 steht. Besonders bevorzugt werden dabei solche Verbindungen, in denen R' eine C₁- bis C₈-Alkylgruppe oder eine 5- bis 7-gliedrige Cycloalkylgruppe, R'' eine C₁- bis C₄-Alkylgruppe und n die Zahlen 1 oder 2 bedeuten.

Unter diesen Verbindungen sind Dimethoxydiisopropylsilan, Dimethoxyisobutylisopropylsilan, Dimethoxydiisobutylsilan, Dimethoxydicyclopentylsilan, Dimethoxysek.butylisopropylsilan, Diethoxydicyclopentylsilan, Diethoxysek.butylisopropylsilan und Diethoxyisobutylisopropylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 10:1 bis 800:1, insbesondere 20:1 bis 200:1, und das Molverhältnis zwischen der Aluminiumverbindung und der als Cokatalysator eingesetzten Elektronendonorverbindung 1:1 bis 100:1, insbesondere 2:1 bis 20:1 beträgt. Die Katalysatorbestandteile können in beliebiger Reihenfolge einzeln oder als Gemisch der Komponenten in das Polymerisationssystem eingebracht werden.

Mit Hilfe derartiger Katalysatorsysteme können die in den erfindungsgemäßen, teilvernetzten Kunststoffmassen enthaltenen Polymerisate a) hergestellt werden. Nach einem besonders bevorzugten zweistufigen Verfahren wird dabei in der Gasphase zunächst in einer ersten Polymerisationsstufe das Propylenhomopolymerisat a₁), und daran anschließend in einer zweiten Polymerisationsstufe das Propylencopolymerisat a₂) produziert.

Die Polymerisation des Propylens wird in der ersten Polymerisationsstufe üblicherweise bei einem Druck von 20 bis 40 bar, einer Temperatur von 60 bis 90°C und einer mittleren Verweilzeit des Reaktionsgemisches von 0,5 bis 5 Stunden durchgeführt. Bevorzugt sind bei der Herstellung des Propylenhomopolymerisats a₁) Drücke von 20 bis 35 bar, einer Temperatur von 65 bis 85°C und mittlere Verweilzeiten von 0,7 bis 3,5 Stunden. Vorzugsweise wählt man dabei die Reaktionsbedingungen so, daß in dieser ersten Polymerisationsstufe pro mmol der Aluminiumkomponente 0,05 bis 2 kg, bevorzugt 0,1 bis 1,5 kg, des Propylenhomopolymerisat a₁) gebildet werden. Zur Molmassenregelung können die bei der Polymerisation von Alk-1-enen üblichen Regler, beispielsweise Wasserstoff mitverwendet werden.

Das hierbei gebildete Propylenhomopolymerisats a₁) wird nach Beendigung der Reaktion zusammen mit dem Katalysator aus der ersten Polymerisationsstufe ausgetragen und in die zweiten Polymerisationsstufe eingeführt, wo diesem ein Gemisch von Propylen und einem oder mehreren C₂-C₁₀-Alk-1-enen hinzupolymerisiert wird. Dies erfolgt üblicherweise bei Drücken von 5 bis 30 bar, Temperaturen von 30 bis 100°C und mittleren Verweilzeiten des Reaktionsgemisches von 0,5 bis 5 Stunden. Bevorzugt sind dabei Drücke von 10 bis 25 bar, Temperaturen von 35 bis 80°C und mittlere Verweilzeiten von 0,7 bis 3,5 Stunden. Üblicherweise liegen dabei die Drücke in der zweiten Polymerisationsstufe um wenigstens 7, vorzugsweise um wenigstens 10 bar unter denen in der ersten Polymerisationsstufe. Als C₂-C₁₀-Alk-1-ene werden dabei insbesondere Ethylen und But-1-en, oder ein Gemisch aus diesen Comonomeren eingesetzt. Zur Herstellung des Propylencopolymerisat a₂) wird das Propylen mit den Comonomeren in der Weise copolymerisiert, daß das Verhältnis zwischen dem Partialdruck des Propylens und dem der Comonomeren auf 0,1:1 bis 20:1, insbesondere auf 0,2:1 bis 15:1, eingestellt wird. Durch geeignete Wahl der Polymerisationsparameter sollte außerdem darauf geachtet werden, daß das Gewichtsverhältnis zwischen den in der ersten und den in der zweiten Polymerisationsstufe umgesetzten Monomeren im Bereich von 0,2:1 bis 20:1, insbesondere im Bereich von 0,4:1 bis 15:1, liegt.

Die Schmelzflußindizes der auf diese Weise erhältlichen Polymerisate a) liegen im Bereich von 0,1 bis 100, insbesondere im Bereich von 0,5 bis 50 g/10 min, bei 230°C und 2,16 kg, nach ISO 1133. Der Schmelzflußindex entspricht dabei derjenigen Menge an Polymerisat, die bei 230°C und einem Gewicht von 2,16 kg aus der nach ISO 1133 genormten Prüfvorrichtung ausgetragen wird.

Weiterhin werden die erfindungsgemäßen, teilvernetzten Kunststoffmassen aufgebaut aus einer Verbindung der folgenden allgemeinen Formel (I) 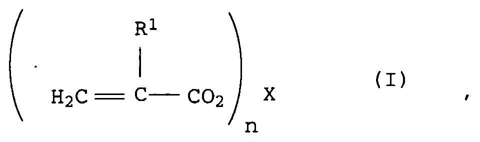 in der
- R¹: für Wasserstoff oder für eine C₁-C₄-Alkylgruppe steht,
- X: eine gegebenenfalls substituierte C₁-C₃₀-Alkylgruppe oder eine gegebenenfalls substituierte C₇-C₃₀-Arylalkylgruppe bedeutet, wobei die Alkylgruppierungen jeweils von
einem oder mehreren Sauerstoffatomen in Etherfunktion ( -O- ) oder Carboxyfunktion ( -O-CO- ) und/oder von
Stickstoffgruppierungen der Formel NR², in der R² für Wasserstoff, C₁- bis C₆-Alkyl oder C₁- bis C₆-Hydroxyalkyl steht,
unterbrochen sein können und
- n: der Zahl 2 oder 3 entspricht.

Bevorzugte Verbindungen b) der allgemeinen Formel (I) sind dabei solche, bei denen R¹ für Wasserstoff, für einen Methylrest oder für einen Ethylrest steht. Besonders bevorzugte Verbindungen b) enthalten für R¹ Wasserstoff oder einen Methylrest und entsprechen damit Derivaten der Acrylsäure oder der Methacrylsäure.

Es werden insbesondere solche Verbindungen b) der allgemeinen Formel (I) eingesetzt, bei denen X für einen C₂-C₂₀-Alkylrest steht, der von einem oder mehreren Sauerstoffatomen in Etherfunktion unterbrochen sein kann. Besonders bevorzugt sind hierbei Trimethylol(C₂-C₄-alkan)triacrylate und insbesondere Trimethylolpropantriacrylat. Beispiele für solche Reste X sind u.a. diejenigen Reste, die sich aus folgenden Alkoholen ergeben: Hexandiol, Tripropylenglykol, Dipropylenglykol, Glycerin, Trimethylolethantriol, Trimethylolpropantriol oder Trimethylolbutantriol.

Weiterhin können solche Verbindungen b) verwendet werden, bei denen X für einen C₂-C₂₀-Alkylrest, insbesondere für einen C₄-C₂₀-Alkylrest steht, der von einer oder mehreren Stickstoffgruppierungen der Formel NR², in der R² für Wasserstoff, C₁- bis C₆-Alkyl oder C₁- bis C₆-Hydroxyalkyl steht, sowie gegebenenfalls weiteren Sauerstoffatomen unterbrochen ist.

Die Reste X der Verbindungen b) können auch aus C₇-C₃₀-, insbesondere aus C₈-C₂₀-Arylalkylgruppen bestehen, die von einem oder mehreren Sauerstoffatomen und/oder Stickstoffgruppierungen unterbrochen sein können. Beispiele für solche Reste X sind u.a. solche Reste, die sich aus Phenylglycerin oder Bisphenol-A-diglycerin ergeben.

Die in den Resten X enthaltenen C₁-C₃₀-Alkylgruppen oder C₇-C₃₀-Arylalkylgruppen sind gegebenenfalls substituiert. Als Substituenten kommen hierbei C₁-C₆-Alkylgruppen, OH-Gruppen oder andere übliche organische Substituenten in Frage.

Die genannten Alkohole werden mit den entsprechenden ungesättigten Carbonsäuren, beispielsweise der Acrylsäure oder der Methacrylsäure nach üblichen Methoden zu den entsprechenden ungesättigten Verbindungen b) umgesetzt. Darüber hinaus sind die Verbindungen b) auch im Fachhandel käuflich.

Die erfindungsgemäßen, teilvernetzten Kunststoffmassen sind erhältlich durch Umsetzung des Polymerisats a) bzw. des Propylenhomopolymerisats a₁) und des Propylencopolymerisats a₂) mit der Verbindung b) bei Temperaturen von 180 bis 280°C, Drücken von 1 bis 100 bar und mittleren Verweilzeiten des Reaktionsgemisches von 0,2 bis 10 Minuten. Bevorzugt sind dabei Temperaturen von 190 bis 260°C, Drücke von 1 bis 60 bar und mittlere Verweilzeiten von 0,2 bis 5 Minuten. Die Umsetzung der einzelnen Komponenten miteinander erfolgt in den in der Kunststoffverarbeitung üblicherweise zur Vereinigung von Stoffen eingesetzten Apparaturen, beispielsweise in Trommelmischern, in Mühlen, in Schnecken- oder Scheibenextrudern, in Walzwerken oder Knetern.

Die Umsetzung des Polymerisats a) mit der Verbindung b) zu den erfindungsgemäßen, teilvernetzten Kunststoffmassen kann sowohl in Abwesenheit, als auch in Anwesenheit eines radikalisch zerfallenden Initiators erfolgen.

Als radikalische Initiatoren werden vorzugsweise organische Peroxide oder Azoverbindungen eingesetzt. Bevorzugt werden dabei solche organischen Peroxidverbindungen verwendet, die bei einer Temperatur von 210°C Halbwertszeiten von 1 bis 30 Sekunden aufweisen. Innerhalb dieser Verbindungen sind insbesondere Dicumylperoxid, Monocumyl(tert.-butyl)-peroxid, Di(tert.-butyl)peroxid, 2,5-Dimethyl-2,5-di(tert.-butylperoxy)hexan und 2,5-Dimethyl-2,5-di(tert.-butylperoxy)hexin (3) hervorzuheben.

Zur Herstellung der erfindungsgemäßen, teilvernetzten Kunststoffmassen werden pro 100 Gew.-Teile des Polymerisats a) in der Regel 0,001 bis 5,0 Gew.-Teile der Verbindung b) und 0 bis 2,0 Gew.-Teile des radikalisch zerfallenden Initiators verwendet. Vorzugsweise werden pro 100 Gew.-Teile des Polymerisats a) 0,01 bis 2,0 Gew.-Teile, insbesondere 0,02 bis 1,0 Gew.-Teile der Verbindung b) und 0 bis 1,0 Gew.-Teile, insbesondere 0 bis 0,5 Gew.-Teile des radikalisch zerfallenden Initiators eingesetzt.

Die Umsetzung des Polymerisats a) mit der Verbindung b) erfolgt vorzugsweise in Extrudern, insbesondere in Zweischneckenextrudern. In einer bevorzugten Ausführungsform dosiert man das Polymerisat a) zusammen mit der Verbindung b) sowie gegebenenfalls dem radikalisch zerfallenden Initiator in den Einzug eines Zweischneckenextruders, wo das Gemisch bei etwa 180 bis 190°C aufgeschmolzen und anschließend bei 180 bis 280°C 0,2 bis 10 Minuten lang zur Reaktion gebracht wird.

Die Verbindung b) sowie gegebenenfalls der radikalisch zerfallende Initiator können auch nach dem Aufschmelzen des Polymerisats a) in den Extruder gegeben werden.

Nach einem ebenfalls bevorzugten Herstellungsverfahren wird die Verbindung b) sowie gegebenenfalls der radikalisch zerfallende Initiator dem Polymerisat a) unmittelbar nach dessen Herstellung in einer an die Herstellungsreaktoren angeschlossenen Mischapparatur hinzugesetzt. Als Mischapparaturen werden dabei insbesondere Extruder verwendet.

Die erfindungsgemäßen teilvernetzten Kunststoffmassen zeichnen sich u.a. durch einen niedrigen Gelgehalt, eine hohe Steifigkeit, ein sehr gutes Steifigkeits-/Zähigkeitsverhältnis, eine hohe Wärmeformbeständigkeit, eine gute Bindenahtfestigkeit sowie eine geringe Neigung zu Weißbruchbildung aus. Im Gegensatz zu vollständig vernetzten Kunststoffen können die erfindungsgemäßen teilvernetzten Kunststoffmassen noch gut verarbeitet werden.

Die erfindungsgemäßen teilvernetzten Kunststoffmassen eignen sich aufgrund ihrer guten Verarbeitbarkeit insbesondere als Materialien für den Spritzguß, das Blasformen, die Extrusion und die Herstellung von Schäumen. Sie können dabei u.a. zur Herstellung von Folien, Fasern und Formkörpern verwendet werden.

### Beispiele

Die in den Beispielen 1 und 2 sowie den Vergleichsbeispielen A, B und C eingesetzten Polymerisate a) wurde jeweils kontinuierlich in einer zweistufigen Gasphasenpolymerisation in zwei hintereinander geschalteten, gerührten Autoklaven, die jeweils mit einem bewegten Festbett aus feinteiligem Polypropylen gefüllt waren, polymerisiert. Die Herstellung der erfindungsgemäßen teilvernetzten Kunststoffmassen erfolgte in einem Zweischneckenextruder "ZSK 57" der Firma Werner & Pfleiderer mit einem Längen/Durchmesserverhältnis von 27. Die verwendeten Polymerisate a) wurden als Granulat dem Zweischneckenextruder zugeführt und dort mit der Verbindung b) und dem radikalischen Initiator c) aufgeschmolzen.

Zur Charakterisierung der Produkte wurden folgende Prüfungen durchgeführt:
Bestimmung des Schmelzflußindex (MFR):
   nach ISO-Norm 1133, bei 230°C und unter einem Gewicht von 2,16 kg.
Bestimmung des Elastizitätsmoduls (Zug-E-Modul):
   nach ISO-Norm 527-2, bei 23°C Meßtemperatur
Bestimmung der Charpy-Kerbschlagzähigkeit:
   Nach ISO-Norm 179-2/1eA, bei 23°C, 0°C und -20°C Meßtemperatur
Bestimmung der Vicat-Erweichungstemperatur:
   VST/A50 nach ISO-Norm 306 mit 10 N Belastung,
   VST/B50 nach ISO-Norm 306 mit 50 N Belastung
Bestimmung der Bindenahtfestigkeit:
   Es wurden zweiseitig angespritzte Schulterstäbe hergestellt, die in der Mitte eine Bindenaht quer zur Längsachse aufwiesen. Die Schulterstäbe entsprachen dabei in ihren Abmessung dem Normalschulterstab Typ 1 nach ISO 527 und besaßen eine Dicke von 3 mm. Die Herstellung der Schulterstäbe erfolgte bei einer Temperatur von 250°C und einer Fließfrontgeschwindigkeit von 200 mm/s. An den auf diese Weise hergestellten Schulterstäben wurde durch Zugexperimente nach ISO 527 bei 23°C die Reißdehnung mit Bindenaht ermittelt.
Bestimmung des Weißbruchs:
   Mittels der Volumenzunahme bei 23°C während der Verformung durch Zugbeanspruchungen. Die Methode wurde im Detail von F.Ramsteiner (Acta Polymerica **42,** 1991, S.584-589) beschrieben. Die Werte (gemessen als d(V/V₀)/dε) können zwischen 0 und 1 liegen, wobei niedrige Werte eine geringe Volumenzunahme und damit eine geringe Weißbruchneigung bedeuten.
Die Bestimmung des Gelgehalts:
   Durch Extraktion in siedendem p-Xylol. Dazu wurden ca. 2 g des Polymerisats in eine Soxhlet-Extraktionshülse eingewogen und es wurde 24 Stunden lang extrahiert. Der nach dem Trocknen in der Hülse verbleibende unlösliche Anteil entspricht dem Gelgehalt.

### Beispiel 1

100 Gew.-Teile eines Propylenpolymerisats a) aus 85 Gew.-% Propylenhomopolymerisat a₁) und 15 Gew.-% Propylen-Ethylen-Copolymerisat a₂) [bestimmt durch Extraktionsfraktionierung nach W. Holtrup, Makromol. Chem. 178, 2335 (1977)], einem Ethylengehalt von 52 Gew.-%, bezogen auf a₂) [bestimmt durch Infrarotspektroskopie] und einem Schmelzflußindex von 5,9 g/10 min [bei 230°C und 2,16 kg, nach ISO 1133], wurden im Zweischneckenextruder mit 0,6 Gew.-Teilen Trimethylolpropantriacrylat und 0,01 Gew.-Teilen 2,5-Dimethyl-2,5-di(tert.)-butylperoxy)hexan vermischt. Die Temperatur betrug dabei 240°C, der Druck 20 bar und die mittlere Verweilzeit 30 Sekunden. Danach wurde das Gemisch aus dem Zweischneckenextruder ausgetragen und granuliert. Das erhaltene Produkt war farblos und geruchlos.

Die Eigenschaften der dabei erhaltenen Kunststoffmasse können der nachfolgenden Tabelle 1 entnommen werden.

### Vergleichsbeispiel A

Das in Beispiel 1 eingesetzte Propylenpolymerisats a) wurde ohne weitere Modifizierung untersucht. Es wurden die gleichen Parameter wie in Beispiel 1 bestimmt. Die Ergebnisse finden sich in der nachfolgenden Tabelle 1.

### Beispiel 2

Beispiel 1 wurde unter den gleichen Bedingungen wiederholt, jedoch wurde als Polymerisat a) ein Propylenpolymerisats aus 75 Gew.-% Propylenhomopolymerisat a₁) und 25 Gew.-% Propylen-Ethylen-Copolymerisat a₂) mit einem Ethylengehalt von 53 Gew.-%, bezogen auf a₂) sowie einem Schmelzflußindex von 7,7 g/10 min eingesetzt.

Die Eigenschaften der dabei erhaltenen Kunststoffmasse können der nachfolgenden Tabelle 1 entnommen werden.

### Vergleichsbeispiel B

Das in Beispiel 2 eingesetzte Propylenpolymerisats a) wurde ohne weitere Modifizierung untersucht. Es wurden die gleichen Parameter wie in Beispiel 2 bestimmt. Die Ergebnisse finden sich in der nachfolgenden Tabelle 1

Wie der Vergleich zwischen Beispiel 1 und Vergleichsbeispiel A sowie zwischen Beispiel 2 und Vergleichsbeispiel B zeigt, werden durch die erfindungsgemäße Teilvernetzung Polymere erhalten, die bei in etwa gleicher Steifigkeit eine deutlich verbesserte Kerbschlagzähigkeit aufweisen, d.h. die ein deutlich verbessertes Steifigkeits-/Zähigkeitsverhältnis besitzen. Darüberhinaus wird nicht nur die Bindenahtfestigkeit verbessert (Vervierfachung der Reißdehnung beidseitig angespritzter Schulterstäbe), sondern die Wärmeformbeständigkeit nimmt zu und die Neigung zum Weißbruch nimmt drastisch ab.

**Tabelle 1**

| | Beispiele | | | |
|---|---|---|---|---|
| | 1 | A | 2 | B |
| Schmelzflußindex [g/10 min] | 6,2 | 5,9 | 9,3 | 7,7 |
| Zug-E-Modul [MPa] | 1262 | 1173 | 1006 | 1024 |
| Charpy-Kerbschlagzähigkeit, 23°C [kJ/m²] | 48 T * | 7 | 60 T | 29 |
| Charpy-Kerbschlagzähigkeit, 0°C [kJ/m²] | 10 | 4 | 40 | 8 |
| Charpy-Kerbschlagzähigkeit, -20°C [kJ/m²] | 5 | 2 | 9 | 6 |
| Reißdehnung - mit Bindenaht - [%] | 10 | 2 | 12 | 3 |
| Vicat-Erweichungstemperatur -VST/A50 - [0°] | 152 | 152 | 146 | 143 |
| Vicat-Erweichungstemperatur -VST/B50 - [°C] | 73 | 66 | 59 | 57 |
| Weißbruch d(V/V₀)/dε | 0,03 | 0,08 | 0,03 | 0,39 |
| Gelgehalt [%] | 0 | 0 | 0 | 0 |

| | | | | |
|---|---|---|---|---|
| * T: Probekörper teilgebrochen | | | | |

### Vergleichsbeispiel C

100 Gew.-Teile eines Propylenpolymerisats a) aus 55 Gew.-% Propylenhomopolymerisat a₁) und 45 Gew.-% Propylen-Ethylen-Copolymerisat a₂) [bestimmt durch Extraktionsfraktionierung nach W. Holtrup, Makromol. Chem. 178, 2335 (1977)], einem Ethylengehalt von 53,5 Gew.-%, bezogen auf die letztere Komponente [bestimmt durch Infrarotspektroskopie] und einem Schmelzflußindex von 2,2 g/10 min [bei 230°C und 2,16 kg, nach ISO 1133], wurden im Zweischneckenextruder mit 0,6 Gew.-Teilen Trimethylolpropantriacrylat und 0,01 Gew.-Teilen 2,5-Dimethyl-2,5-di(tert.)-butylperoxy)hexan vermischt. Die Temperatur betrug dabei 240°C, der Druck 20 bar und die mittlere Verweilzeit 30 Sekunden. Danach wurde das Gemisch aus dem Zweischneckenextruder ausgetragen und granuliert. Das erhaltene Produkt war farblos und geruchlos.

Die Eigenschaften der erhaltenen Kunststoffmasse können der nachfolgenden Tabelle 2 entnommen werden.

**Tabelle 2**

| | Vergleichsbeispiel C |
|---|---|
| Schmelzflußindex [g/10 min] | 2,2 |
| Zug-E-Modul [MPa] | 497 |
| Charpy-Kerbschlagzähigkeit, 23°C [kJ/m²] | 96 T |
| Charpy-Kerbschlagzähigkeit, 0°C [kJ/m²] | 79 T |
| Charpy-Kerbschlagzähigkeit, - 20°C [kJ/m²] | 45 T |
| Reißdehnung- mit Bindenaht - [%] | >400 |
| Vicat-Erweichungstemperatur - VST/A50 - [°C] | 116 |
| Vicat-Erweichungstemperatur - VST/B50 - [°C] | 37 |
| Gelgehalt [%] | 0 |

| | |
|---|---|
| * T: Probekörper teilgebrochen | |

Wie die Ergebnisse zeigen, weist das Vergleichsbeispiel C neben einer sehr geringen Steifigkeit auch eine schlechte Wärmeformbeständigkeit auf.

## Patentansprüche

1. Teilvernetzte Kunststoffmassen mit einem Schmelzflußindex von 0,1 bis 100 g/10 min., bei 230°C und unter einem Gewicht von 2,16 kg, und einem Gelgehalt unter 12 Gew.-% aus
a) einem Polymerisat aus
a₁) 60 bis 92 Gew.-% eines Propylenhomopolymerisats und
a₂) 8 bis 40 Gew.-% eines Propylencopolymerisats mit einpolymerisierten C₂-C₁₀-Alk-1-enen, wobei der Comonomerengehalt, bezogen auf a₂), 15 bis 70 Gew.-% beträgt, und
b) einer Verbindung der folgenden allgemeinen Formel (I) 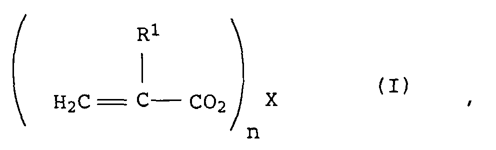 in der
R¹ für Wasserstoff oder für eine C₁-C₄-Alkylgruppe steht,
X eine gegebenenfalls substituierte C₁-C₃₀-Alkylgruppe oder eine gegebenenfalls substituierte C₇-C₃₀-Arylalkylgruppe bedeutet, wobei die Alkylgruppierungen von
einem oder mehreren Sauerstoffatomen in Etherfunktion ( -O- ) oder Carboxyfunktion ( -O-CO- ) und/oder von
Stickstoffgruppierungen der Formel NR², in der R² für Wasserstoff, C₁- bis C₆-Alkyl oder C₁- bis C₆-Hydroxyalkyl steht,
unterbrochen sein können und
n der Zahl 2 oder 3 entspricht,
erhältlich durch Umsetzung des Polymerisats a) mit der Verbindung b) bei Temperaturen von 180 bis 280°C, Drücken von 1 bis 100 bar und mittleren Verweilzeiten des Reaktionsgemisches von 0,2 bis 10 Minuten.

2. Teilvernetzte Kunststoffmassen nach Anspruch 1, wobei das Polymerisat a) in einem mehrstufigen Polymerisationsprozeß hergestellt wird.

3. Teilvernetzte Kunststoffmassen nach Anspruch 1 oder 2, wobei das Polymerisat a) aus 72 bis 88 Gew.-% eines Propylenhomopolymerisats a₁) und 12 bis 28 Gew.-% eines Propylencopolymerisats a₂) besteht.

4. Teilvernetzte Kunststoffmassen nach den Ansprüchen 1 bis 3, wobei der Comonomergehalt des Propylencopolymerisats a₂) 30 bis 55 Gew.-% beträgt.

5. Teilvernetzte Kunststoffmassen nach den Ansprüchen 1 bis 4, erhältlich durch Umsetzung des Polymerisats a) mit der Verbindung b) in Anwesenheit eines radikalisch zerfallenden Initiators.

6. Teilvernetzte Kunststoffmassen nach den Ansprüchen 1 bis 5, erhältlich indem man pro 100 Gew.-Teile des Polymerisats a) 0,001 bis 5 Gew.-Teile der Verbindung b) und 0 bis 2 Gew.-Teile eines radikalisch zerfallenden Initiators verwendet.

7. Teilvernetzte Kunststoffmassen nach den Ansprüchen 1 bis 6, erhältlich durch Umsetzung des Polymerisats a) mit Verbindungen b) der Formel (I), in der R¹ Wasserstoff, einen Methyl- oder einen Ethylrest bedeutet.

8. Teilvernetzte Kunststoffmassen nach den Ansprüchen 1 bis 7, erhältlich durch Umsetzung des Polymerisats a) mit Verbindungen b) der Formel (I), in der X für einen C₂-C₂₀-Alkylrest steht, der von einem oder mehreren Sauerstoffatomen in Etherfunktion unterbrochen sein kann.

9. Teilvernetzte Kunststoffmassen nach den Ansprüchen 1 bis 8, wobei als Verbindung b) ein Trimethylol(C₂-C₄-alkan)triacrylat verwendet wird.

10. Verfahren zur Herstellung von teilvernetzten Kunststoffmassen gemäß den Ansprüchen 1 bis 9, dadurch gekennzeichnet, daß man die Umsetzung des Polymerisats a) mit der Verbindung b) bei Temperaturen von 180 bis 280°C, Drücken von 1 bis 100 bar und mittleren Verweilzeiten des Reaktionsgemisches von 0,2 bis 10 Minuten durchführt.

11. Verfahren zur Herstellung von teilvernetzten Kunststoffmassen nach Anspruch 10, dadurch gekennzeichnet, daß man das Polymerisat a) unmittelbar nach dessen Herstellung in einer an den Herstellungsreaktor angeschlossenen Mischapparatur mit der Verbindung b) gemäß den Ansprüchen 1 oder 7 bis 9 umsetzt.

12. Folien, Fasern und Formkörper aus den teilvernetzten Kunststoffmassen gemäß den Ansprüchen 1 bis 9.
